# EUROPEAN PATENT SPECIFICATION

(11) **EP 4 494 984 B1**
(45) Date of publication and mention of the grant of the patent: **22.10.2025**
(21) Application number: 24186602.9
(22) Date of filing: 04.07.2024
(51) Int. Cl.: B62J 1/08, B62J 1/10

(54) **BICYCLE SADDLE ADAPTER**
FAHRRADSATTELADAPTER
ADAPTATEUR DE SELLE DE BICYCLETTE

(30) Priority: 20.07.2023 IT 202300015273
(43) Date of publication of application: 22.01.2025
(73) Proprietor: Morelli, Angelo, 29010 Pontenure (Piacenza) (IT)
(72) Inventor: Morelli, Angelo, 29010 Pontenure (Piacenza) (IT)
(74) Representative: Ripamonti, Enrico

(56) References cited:
- WO-A1-2011/160978
- WO-A1-2016/005163
- JP-A- H02 145 321

## Description

The present invention relates to a bicycle saddle adapter. More in particular, the present invention relates to a bicycle saddle adapter which, as better explained below in the description, is especially suitable for allowing the mounting of different types of saddles on different types of bicycles.

As it is known, the saddle is a fundamental component of a bicycle, forming the main, as well as most important, of the five points of contact that the cyclist has with the bicycle.

The saddle does not support the entire weight of the cyclist but rather a significant part thereof, with the remaining part of the weight being supported by the legs and, to a variable extent, by the arms of the cyclist according to the position taken on the saddle by the cyclist from time to time in relation to the type of race, route, competitive moment and the like; the position of the saddle, the height thereof, the distance with respect to the handlebars have a significant influence on the posture of the cyclist, substantially conditioning the quality of the pedaling by directly affecting the mechanics of the pedaling, the muscle fatigue process resulting therefrom and similar factors of the cyclist which influence the overall performance level of the cyclist.

Conventionally, a saddle has a tapered shape with a central part that is functional to support the pelvis of the cyclist, a front part or "beak", facing in the direction of the handlebars, which is tapered with respect to the central part which is wider and functional to allow the free movement of the legs of the cyclist while pedaling.

A saddle comprises three fundamental elements defined by the saddle body, by the lower guides and by the coating, with the saddle body being usually made of a molded thermoplastic material (of the nylon type or of other materials deformable to adapt to the physical features of the cyclist, absorb shocks, dampen the vibrations propagating from the wheels along the frame of the bicycle itself, etc.), the lower guides are the means that allow the saddle to be mounted onto the bicycle and are, generally, defined by a pair of opposite shaped bars, and, finally, the coating that is the part coming into contact with the cyclist and which must be light and flexible, it must be able to absorb shocks, vibrations and the like.

Bicycle saddles have different shapes and sizes also depending on the kind of bicycle of the city bike, racing bike, mountain bike, gravel bike type etc., and are conventionally all characterized by a pair of rods rigidly constrained to the upper or saddle body, made of metal material or of another known material suitable for the purpose (for example, carbon fiber) and shaped and spaced apart so as to be mounted on any type of seatpost for any type of bicycle.

However, such rods are not flexible but, on the contrary, they are particularly rigid and this is due to the fact that, for example in the case of a saddle for racing bicycles, it is believed that they should never suffer any sagging or bending in the vertical direction (chipping) as well as in the horizontal direction (flagging); therefore, the rods-upper combination is not capable of cushioning or dampening any shocks and vibrations transmitted by the bicycle and this is particularly felt in case of competition bicycles that do not use (or use to a negligible extent) padded covers or elastic elements applied to the saddle.

Furthermore, saddles supported by metal rods are vulnerable to the multiple stresses to which they are subjected, and which are generated by the weight of the cyclist added to jolts, jerks and vibrations resulting from a prolonged road use of the bicycle.

In addition to the inconvenience mentioned above, the stems of such conventional saddles (which are thin and fragile) are also subject to breakage or deformation (especially in the case of falls off the bicycle or collisions which may occur during sport competitions) and this may be dangerous for the cyclist who could be injured by the broken stems.

Furthermore, conventional saddles with rods may be subject to a "overcompression" of the saddle itself, due to the fact that the stems, the seats thereof in the shell and the shell itself, if stressed for a prolonged time by the weight of the cyclist, tend to weaken and progressively fail, causing a depression in the central part of the saddle; a saddle with a "overcompression" issue causes a progressive variation in the distance between the upper surface of the saddle and the axis of the pedals and, furthermore, it is no longer comfortable for the cyclist who finds the seat support and, above all, the pedaling altered, with a consequent worsening of performances; such issues may only be solved by replacing the saddle (this is particularly bad in the case of sport competitions).

The inconvenience of overcompression involves the need to replace the shell which, however, is not of an interchangeable type since, with the well-known and conventional saddle assemblies, the simple replacement of the seat/upper is not sufficient, but the replacement of the entire saddle (including the welded rods) is required, with a related inconvenience in terms of replacement times and costs.

A possible solution to such issues may be the use of a saddle without rods (i.e., a saddle provided with different means of support and attachment to the bicycle seatpost); however, in this case, it would be necessary to have a dedicated seatpost available and, therefore, one specifically made according to the specific type of saddle, and this causes inconveniences in terms of costs, tooling times and the like.

Furthermore, racing, road, gravel or off-road bicycles share the feature of structural rigidity of the frames, which is taken to the extreme in the case of racing bicycles, and, similarly, the wheels tend to be extremely hard and rigid, they adopt high profile rims which are believed to be more performing and have tires inflated to a high number of bars or tires whose width does not coincide with the inner channel of the rim (i.e., the tire bulges out with respect to the rim); all these elements have a negative effect on the structure of the bicycle which is not capable of cushioning or dampening any shocks and vibrations which, from the indicated components, are transmitted to the saddle and the cyclist.

Furthermore, the vibrations originate from the rolling of the wheels on terrains with highly rough asphalt and from the shaking of the bicycle caused by repeated impacts at random intervals and generated by traveling at high speed on roads with a rough surface due to the presence of cracks, bumps, erosions, curbs, manholes, etc. which, associated with what has been described above with reference to the features of the wheels and frames, just intensify the issues linked to vibrations and, in particular, vibrations of the pulsing type in the fibers of the materials which, not encountering absorption and/or dispersion joints along the propagation path thereof, are transmitted in successive waves and produce an uninterrupted flow of vibrations that propagates and expands by virtue of the lever arms defined by the wheels and the tubular elements of the frame and from there to the cyclist.

In conventional bicycles and, in particular, in racing bicycles, vibrations are a considerable issue that causes inconveniences, not only for the bicycle and the components thereof, but also and, above all, for the cyclist to whom the bicycle itself transmits all stresses. The stresses and vibrations that are transmitted from the bicycle to the cyclist are particularly harmful due to the negative consequences they have on the body of the cyclist.

As it is known, cycling is a sporting activity which, due to the nature and features thereof, is practiced over long periods of time and it is not a sporting discipline that is characterized by short journeys covered in a short time and this has particular importance in case of cyclists who perform a competitive activity, i.e., cyclists who, summing training and competitions, spend long periods of time on the bicycle, pedaling substantially in all weather and/or terrain or road conditions and, with particular reference to sport competitions, with the need to maintain a position on the saddle which is as aerodynamic as possible so as to oppose the air with a minimum "resistant profile" and seek maximum efficiency in the forward action so as to achieve high performance.

The above results may only be obtained by adopting a crouched posture on the bicycle, such forced posture also affecting the spine, arms and neck and having to be maintained for long periods of time.

The combination between the described forced posture of the cyclist and the pulsing vibrations resulting from impacts and mechanical stresses of all kinds described above to which the cyclist is subject have negative repercussions on the body thereof, in a manner directly proportional to the duration of the effort, the intensity of the vibrations, the time of exposure thereto, the individual absorption capacity that depends on the age of the cyclist, the muscular shape thereof, gender and other known factors.

In fact, the cyclist may experience more or less pronounced ailments or may incur damage of a muscular and osteoarticular nature such as, for example, soreness, contractures, inflammation, issues with the tendons, the compartments of the upper part of the body (shoulders and shoulder blades), onset or worsening of injuries affecting the dorsal lumbosacral tract, neck and rachis.

Furthermore, vibrations and stresses of various nature which, in particular circumstances, are transmitted to the cyclist through the saddle, may cause to the cyclist muscular stress and swelling in the pelvic area on which most of the weight of the cyclist rests and may branch out and affect the internal soft bodies and the buttocks with heavy repercussions on the entire muscular system of the thigh (on the knee) or on the bones at the height of the pelvis, thus compromising the full functionality of the legs that for a cyclist are the main and fundamental propulsion tool and which are already particularly stressed by the conventional nature of the cycling.

To try to remedy such an important inconvenience, as explained above, the saddles may be provided with padding or elastic elements of the soft type (which is not feasible in case of racing bicycles due to the excessive weight and size) or saddles of different types may be made which, for example, do not comprise the pair of rods or which have a different size with respect to those of conventional standardized saddles to increase the performance of the cyclist.

However, such different types of saddle are impossible to mount on conventional seatpost and require the replacement of the seatpost as a whole with a seatpost specifically dedicated to the type of saddle to be mounted.

In addition to the solutions mentioned above with reference to saddles, cyclists sometimes reinforce the crotch of shorts by increasing the padding thereof; however, such a solution does not solve the above-mentioned drawbacks and may add further ones mainly related to:
a) impossibility of fixing the height of the saddle with adequate precision (unacceptable limitation for a cyclist accustomed to a pedaling of a pre-established length as well as constantly and meticulously verified) and this due to the fact that a significant padding (i.e., oversized), under the weight of the cyclist, tends to compact with use, altering the measurement of the height of the saddle previously fixed on the basis of a new and puffed padding, i.e., not deformed by the weight of the cyclist;
b) discomfort of the pedaling resulting from the need to keep an unusually voluminous padding inside the cycling shorts which, in fact, increases the size of the saddle at the support area of the pelvis, thus preventing the maintenance of a perfect alignment/parallelism of the legs while pedaling, with a consequent risk of lowering the level of safety on the bicycle and with a decrease in performance and/or stability and performance of the bicycle;
c) physical inconveniences linked to the fact that an increased padding in cycling shorts may lead to discomforts such as abrasions or an increase in the temperature localized in areas with particularly delicate exposed skin or particularly sensitive muscle groups. Document WO2011/160978A1, which discloses all the features of the preamble of independent claim 1, shows a known saddle.

It is the object of the present invention to obviate the drawbacks disclosed above.

More specifically, it is the object of the present invention to provide a bicycle saddle adapter which is capable of allowing different types of saddles without rods to be mounted and with shapes and sizes different with respect to those of the standard type with seatposts of the conventional type without the need of seatposts being specifically made.

It is a further object of the present invention to provide an adapter which allows to dampen and absorb the vibrations which are transmitted through the wheels and the frame to the seatpost and the saddle and, consequently, to the cyclist.

It is a further object of the present invention to provide a saddle adapter which allows to reduce the issues related to the vibrations by ensuring the use of saddles that are compact and suitable for the competition environment and that, furthermore, do not create comfort or physical issues to the cyclist.

It is a further object of the present invention to provide a bicycle saddle adapter which allows to increase the level of safety for the cyclist who may easily mount a saddle without rods on a conventional seatpost; in fact, saddles provided with rods may, as described above, be subject to breakage thereof (for example, following a fall) and, therefore, they may be dangerous for the cyclist.

It is a further object of the present invention to provide a bicycle saddle adapter which is robust, with substantial mechanical features and which is not subject to "overcompression" issues of the shell or shield, as described above for saddles of the conventional type.

It is a further object of the present invention to provide a bicycle saddle adapter which is simple and quick to use and which, furthermore, allows a saddle to be quickly and easily fastened to the seatpost.

It is a further object of the present invention to provide a compact saddle adapter such as to ensure a high aesthetic value for the saddle and for the bicycle as a whole when mounting saddles of different types.

It is a further object of the present invention to provide users with an adapter for bicycle saddles that is reliable and durable over time and which, furthermore, is easy and cheap to manufacture.

These and other objects are achieved by the invention having the features outlined in claim 1.

In accordance with the invention, an adapter for a bicycle saddle is provided, forming a connection interface between a shell or shield of a saddle and a head of a seatpost tube of the bicycle frame, comprising a plate or foil connected to the shell or shield and interface means for said plate or foil cooperating with means for tightening with respect to the head (14') of the seatpost tube.

Advantageous embodiments of the invention become apparent from the dependent claims.

The construction and functional features of the bicycle adapter of the present invention may be better understood from the following detailed description in which reference is made to the accompanying drawings that show embodiments thereof given only by way of explanation and not by way of limitation, and in which:

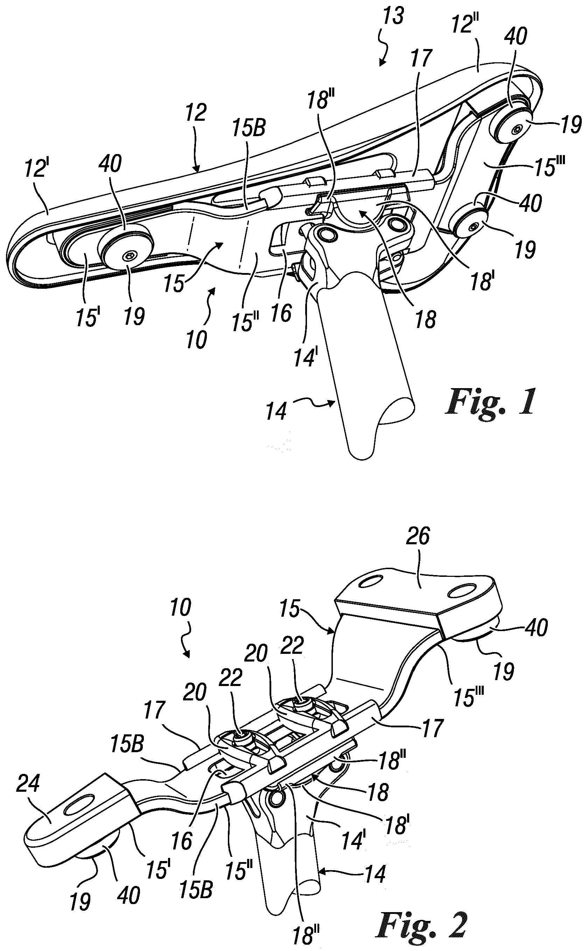

Figure 1 diagrammatically shows an axonometric view of a saddle assembly comprising the bicycle saddle adapter of the present invention;
Figure 2 diagrammatically shows an axonometric view of the saddle assembly shown in Figure 1 provided with the adapter and without the saddle body or upper;

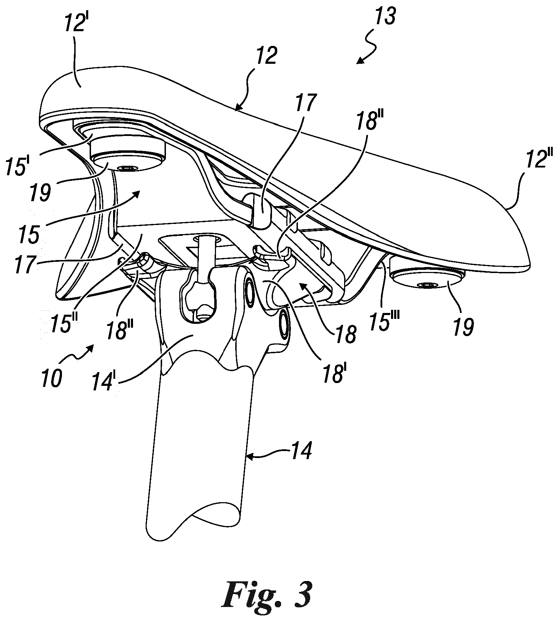

Figure 3 diagrammatically shows an axonometric view of a saddle provided with the adapter of the invention.

With reference to the aforesaid Figures, the bicycle saddle adapter of the present invention, overall indicated with 10 in the Figures, is applied to a saddle (overall indicated with 13) of the type without rods and connected to a seatpost tube 14 stabilized onto the frame (not shown) of a bicycle (also not shown); more in particular, the adapter is stabilized with respect to a shell or shield 12 of said saddle 13 and onto a head 14' of said seatpost tube 14, with said shell or shield 12 being made of rigid or soft material and possibly covered with a cover (the choice of the covering material depends on the specific needs of the cyclist and/or on the type of bicycle) arranged to cover an upper front of the shell or shield itself.

The adapter comprises a plate or foil 15 provided with interface means with means for tightening with respect to the head 14' of the seatpost tube 14 and means for tightening said plate or foil with respect to the interface means.

The plate or foil 15 is longitudinally extended (preferably it has a longitudinal extension substantially corresponding to the longitudinal extension of the shell or shield 12 of the saddle 13), it has a thin section thickness and it has, in a vertical plane, an arched profile comprising a front portion 15', a central portion 15'' and a rear portion 15‴ and it has elastic properties (with an elastic behavior of the "leaf spring" type) .

The plate or foil 15 is made of materials of the plastic, carbon fiber, carbon/kevlar, thermoplastic resin, titanium type or of another material suitable for the purpose, with features of lightness, high structural and mechanical resistance and, as described above, with elastic behavior. Said plate or foil 15 stabilizes onto the shell or shield 12 at the front portion 15' thereof (stabilized at the tip 12' of the shell or shield 12 which, as it is known, defines the narrowest part of the shell or shield) and at the opposite rear portion 15‴ (stabilized at the tail 12" of the shell or shield 12 which, as it is known, defines the wider portion of the shell or shield against which the buttocks of the cyclist rest).

The central portion 15'' of the plate or foil 15 comprises at least one central opening 16 of the pass-through type and with a longitudinal extension.

A pair of opposite and parallel ridges 17 longitudinally extended substantially along the entire length extension of the central portion 15'' of the plate or foil 15 are formed at outer side edges 15B of said central portion 15'' and define interface means with means for tightening with respect to the head 14' of the seatpost tube 14 (as better detailed below).

Said opposite and parallel ridges 17 are made in a single piece with the plate or foil 15 or, in accordance with alternative embodiments they may define separate elements rigidly constrained to said plate or foil.

As described above, the plate or foil 15 stabilizes onto the shell or shield 12 there below (at a lower front opposite to the upper front which defines the seat for the cyclist) and it is stabilized onto said shield by means of screws 19 at the front portion 15' (stabilized at the tip 12' of the shell or shield 12) and at the rear portion 15‴ (stabilized at the tail 12" of the shell or shield 12).

The adapter of the invention may comprise an accessory element for intensifying the damping of the vibration, comprising one or more pads stabilized onto the plate or foil 15 and arranged between said plate or foil and a lower front of the shell or shield 12 of the saddle; said pads are made of plastic material, polyurethane rubber and similar known materials suitable for the purpose.

With reference to the preferred embodiment shown in the Figures, the vibration damping element comprises at least one first pad 24 coupled to the plate or foil 15 at the front portion 15' and at least one second pad 26 coupled to the plate or foil 15 at the rear portion 15'''.

In accordance with an alternative embodiment, the vibration damping element comprises a single pad extended along the entire length of the plate or foil 15 and stabilized at the front 15' and rear 15‴ portions of said plate or foil (or stabilized along the entire extension of said plate or foil), with said single pad possibly provided with a central opening functional for a correct coupling with a saddle provided with a central opening or channel (formed in the direction of longitudinal extension of the saddle) with the function of protecting the prostate of the cyclist (such opening also known as "love channel"), with said central opening of the pad being at the central opening or channel of the saddle. Furthermore, further accessory elements for intensifying the damping of the vibration may be applied at the screws 19 for fixing the plate or foil 15 with respect to the saddle 12, with said further accessory elements comprising elastic washers 40 tightened between the screws 19 and the plate or foil 15 and made of Nylon, rubber, nitrile rubber and other materials suitable for the purpose.

The pads and the elastic washers described are customizable in terms of size, thicknesses and material features and may be easily modified/replaced by the cyclist according to the specific needs thereof.

The adapter described above is stabilized onto the seatpost 14 and, more in particular, onto the head 14' thereof via means for tightening that cooperate with the interface means of the plate or foil 15 defined by the opposite and parallel ridges 17.

Said interface means, which are of a known type, comprise a lower block 18 which couples to a lower front of the central portion 15'' of the plate or foil 15 (on the opposite side with respect to the anterior front of the same central portion facing in the direction of the shell or shield 12) and with the head 14' of the seatpost tube 14 and an upper block 20 which couples to an upper front of the central portion 15'' of the plate or foil 15 on the opposite side with respect to the side for coupling said plate or foil 15 with said lower block 18.

Furthermore, the opposite and parallel ridges 17 allow a translational sliding of the plate or foil 15 (and, therefore, of the shell or shield 12 to which said plate or foil is connected) so as to adjust the position of the saddle with respect to the handlebars of the bicycle, prior to tightening and stabilizing said saddle with respect to the seatpost as described below.

The tightening and stabilization of the adapter of the invention with respect to the seatpost are achieved by means of a retaining element defined by at least one vertical screw 22 that couples to the upper block 20 and to the lower block 18 and that engages with the head 14' of the seatpost tube 14.

By way of explanation and with reference to the embodiment shown in the Figures, the lower block 18 may comprise a portion 18' with a transverse extension with reference to the longitudinal extension of the plate or foil 15, adapted to couple to the head 14' of the seatpost tube 14 and a pair of opposite and parallel edgings 18" that extend according to a longitudinal extension direction of the plate or foil 15 starting from the end of the portion 18' of said block 18, with said opposite and parallel edgings extended for a length substantially corresponding to the length of the opposite and parallel ridges 17 of the plate or foil 15 and functional to couple below thereto.

Likewise, by way of explanation, the upper block 20 may comprise at least one bracket arranged transversally with respect to the longitudinal extension of the plate or foil 15 and extended in length to transversely embrace the opposite and parallel ridges 17 of the plate or foil 15 on the opposite side with respect to the lower block 18; in accordance with an alternative embodiment, the upper block 20 may comprise a tag.

As can be seen from the above, the advantages achieved by the bicycle saddle adapter of the present invention are evident.

The bicycle saddle adapter of the present invention advantageously allows a saddle of the type without rods to be adapted onto a common seatpost provided with a head of any shape and size adapted to receive and tighten any saddle of a known type with attachments of the unified type.

It is a further advantage that the adapter of the invention advantageously allows a common saddle, from which the rods have been removed, to be connected to any type of seatpost, without the need to have a specifically constructed seatpost.

It is a further advantage that the adapter of the invention is simple to manufacture and simple to apply to the saddle and seatpost.

It is a further advantage that the adapter of the invention allows for a greater safety for the cyclist, and this occurs since it allows stabilizing a saddle without rods and, therefore, it avoids rod braking or saddle overcompression issues.

It is a further advantage of the adapter of the present invention the presence of any rubber pads and washers which allow optimizing the damping of the vibrations transmitted to the cyclist.

It is also advantageous that the adapter of the invention allows defining a saddle assembly with compact dimensions and in line with maintaining the performance required by cyclists.

It is a further advantage of the adapter of the invention that it is easily configurable by the cyclist; in fact, it is possible to vary the features of the pads and/or of the elastic rubber washers according to specific needs.

It is a further advantage of the adapter of the invention that the cyclist may be provided with, and have different types of adapter and, more in particular, a different plate or foil 15 with reference to the size, materials, thicknesses, mechanical features (stiffness, elasticity, etc.) that may be used according to specific needs and in response to different vibration and stress issues, as described above.

It is a further advantage of the present invention that the adapter is compact and such to ensure a high aesthetic value both for the saddle as well as for the bicycle as a whole.

Although the present invention was described above with particular reference to an embodiment thereof, exclusively given by way of non-limiting example, several modifications and variations will be apparent to those skilled in the art in light of the above description. Therefore, the present invention aims to encompass all modifications and variants falling within the scope of the following claims.

## Claims

1. An adapter (10) for a bicycle saddle forming a connection interface between a shell or shield (12) of a saddle (13) and a head (14') of a seatpost tube (14) of the bicycle frame, comprising a plate or foil (15) connected to the shell or shield (12) and interface means for said plate or foil (15) comprising a pair of opposite and parallel ridges (17) longitudinally extended at outer side edges (15B) of the plate or foil (15) cooperating with means for tightening with respect to the head (14') of the seatpost tube (14) that comprise a lower block (18) adapted to couple to the head (14') and comprising a pair of opposite and parallel edgings (18'') longitudinally extended and adapted to couple to the opposite and parallel ridges (17) of the plate or foil (15), **characterized in that** said adapter comprises an element for damping vibrations which comprises one or more pads stabilized onto the plate or foil (15) and arranged between said plate or foil and a lower front of the shell or shield (12).

2. An adapter according to claim 1, **characterized in that** the plate or foil (15) is longitudinally extended with a length substantially corresponding to the longitudinal extension of the shell or shield (12) of the saddle (13), it has a thin section thickness and it has, in a vertical plane, a profile comprising a front portion (15'), a central portion (15'') comprising at least one central opening (16) of the pass-through type and with a longitudinal extension, a rear portion (15‴), and it has elastic properties.

3. An adapter according to claim 1 or 2, **characterized in that** the opposite and parallel ridges (17) that are longitudinally extended substantially along the entire length of the central portion (15''), of the plate or foil (15) and are formed at the outer side edges (15B) of said central portion (15").

4. An adapter according to claim 3, **characterized in that** the opposite and parallel ridges (17) are made in a single piece with the plate or foil (15), or they are separate elements rigidly constrained to said plate or foil.

5. An adapter according to the preceding claims, **characterized in that** the plate or foil (15) is stabilized below the shell or shield (12) with the front portion (15') thereof at a tip (12') of the shell or shield (12) and with the opposite rear portion (15‴) stabilized at the tail (12'') of the shell or shield (12).

6. An adapter according to claim 5, **characterized in that** the plate or foil (15) is stabilized onto said shell or shield (12) by means of screws (19).

7. An adapter according to the preceding claims, **characterized in that** it comprises further accessory elements, for intensifying the damping of the vibrations, applied at the screws (19) for fixing the plate or foil (15) with respect to the saddle (12) and comprising elastic washers (40) tightened between the screws (19) and the plate or foil (15).

8. An adapter according to the preceding claims, **characterized in that** it comprises at least one first pad (24) coupled to the plate or foil (15) at the front portion (15') and at least one second pad (26) coupled to the plate or foil (15) at the rear portion (15‴).

9. An adapter according to the preceding claims, **characterized in that** it comprises a single pad extended for the entire length of the plate or foil (15), stabilized onto said plate or foil, said single pad possibly provided with a central opening which is functional to a correct coupling with a saddle provided with a central opening or channel with a prostate protection function.

10. An adapter according to the preceding claims, **characterized in that** the lower block (18) couples to a lower front of the central portion (15") of the plate or foil (15) on the opposite side with respect to the anterior front of the same central portion facing in the direction of the shell or shield (12) and with the head (14') of the seatpost tube (14), an upper block (20) couples to an upper front of the central portion (15'') of the plate or foil (15) on the opposite side with respect to the side for coupling said plate or foil (15) with said lower block (18).

## Patentansprüche

1. Adapter (10) für einen Fahrradsattel, der eine Verbindungsschnittstelle zwischen einer Schale oder einem Schild (12) eines Sattels (13) und einem Kopf (14') eines Sattelstützenrohrs (14) des Fahrradrahmens bildet, umfassend eine Platte oder ein Blech (15), die/das mit der Schale oder dem Schild (12) verbunden ist, und Schnittstelleneinrichtungen für die Platte oder das Blech (15), umfassend ein Paar gegenüberliegender und paralleler Rippen (17), die sich in Längsrichtung an äußeren Seitenrändern (15B) der Platte oder des Blechs (15) erstrecken und mit Einrichtungen zum Festziehen in Bezug auf den Kopf (14') des Sattelstützenrohrs (14) zusammenwirken, die einen unteren Block (18) umfassen, der angepasst ist, um mit dem Kopf (14') gekoppelt zu sein, und umfassend ein Paar gegenüberliegender und paralleler Einfassungen (18"), die sich in Längsrichtung erstrecken und angepasst sind, um mit den gegenüberliegenden und parallelen Rippen (17) der Platte oder des Blechs (15) gekoppelt zu sein, **dadurch gekennzeichnet, dass** der Adapter ein Element zum Dämpfen von Schwingungen umfasst, das ein oder mehrere Polster umfasst, die auf der Platte oder dem Blech (15) stabilisiert und zwischen der Platte oder dem Blech und einer unteren Vorderseite der Schale oder des Schilds (12) angeordnet sind.

2. Adapter nach Anspruch 1, **dadurch gekennzeichnet, dass** sich die Platte oder das Blech (15) in Längsrichtung mit einer Länge erstreckt, die im Wesentlichen der Längserstreckung der Schale oder des Schilds (12) des Sattels (13) entspricht, eine geringe Querschnittsstärke aufweist und in einer vertikalen Ebene ein Profil aufweist, umfassend einen vorderen Abschnitt (15'), einen mittleren Abschnitt (15"), umfassend mindestens eine mittlere Öffnung (16) vom Typ Durchgang und mit einer Längserstreckung, und einen hinteren Abschnitt (15‴), und das elastische Eigenschaften aufweist.

3. Adapter nach Anspruch 1 oder 2, **dadurch gekennzeichnet, dass** die gegenüberliegenden und parallelen Rippen (17), die sich in Längsrichtung im Wesentlichen über die gesamte Länge des mittleren Abschnitts (15") der Platte oder des Blechs (15) erstrecken und an den äußeren Seitenrändern (15B) des mittleren Abschnitts (15") gebildet sind.

4. Adapter nach Anspruch 3, **dadurch gekennzeichnet, dass** die gegenüberliegenden und parallelen Rippen (17) in einem einzigen Stück mit der Platte oder dem Blech (15) gefertigt sind oder sie separate Elemente sind, die starr an der Platte oder dem Blech befestigt sind.

5. Adapter nach den vorherigen Ansprüchen, **dadurch gekennzeichnet, dass** die Platte oder das Blech (15) unter der Schale oder dem Schild (12) stabilisiert ist, wobei der vordere Abschnitt (15') davon an einer Spitze (12') der Schale oder des Schilds (12) und der gegenüberliegende hintere Abschnitt (15"') an der Hinterseite (12") der Schale oder des Schilds (12) stabilisiert ist.

6. Adapter nach Anspruch 5, **dadurch gekennzeichnet, dass** die Platte oder das Blech (15) mittels Schrauben (19) auf der Schale oder dem Schild (12) stabilisiert ist.

7. Adapter nach den vorherigen Ansprüchen, **dadurch gekennzeichnet, dass** er weitere Zubehörelemente zum Intensivieren des Dämpfens der Schwingungen umfasst, die an den Schrauben (19) zum Befestigen der Platte oder des Blechs (15) in Bezug auf den Sattel (12) angewandt sind, und umfassend elastische Unterlegscheiben (40), die zwischen den Schrauben (19) und der Platte oder dem Blech (15) festgezogen sind.

8. Adapter nach einem der vorherigen Ansprüche, **dadurch gekennzeichnet, dass** er mindestens ein erstes Polster (24), das an dem vorderen Abschnitt (15') mit der Platte oder dem Blech (15) verbunden ist, und mindestens ein zweites Polster (26), das an dem hinteren Abschnitt (15"') mit der Platte oder dem Blech (15) verbunden ist, umfasst.

9. Adapter nach den vorherigen Ansprüchen, **dadurch gekennzeichnet, dass** er ein einzelnes Polster umfasst, das sich über die gesamte Länge der Platte oder des Blechs (15) erstreckt und auf der Platte oder dem Blech stabilisiert ist, wobei das einzelne Polster möglicherweise mit einer mittleren Öffnung versehen ist, die für ein korrektes Koppeln mit einem Sattel funktionsfähig ist, der mit einer mittleren Öffnung oder einem Kanal mit einer Prostataschutzfunktion versehen ist.

10. Adapter nach den vorherigen Ansprüchen, **dadurch gekennzeichnet, dass** der untere Block (18) mit einer unteren Stirnseite des mittleren Abschnitts (15") der Platte oder des Blechs (15) auf der gegenüberliegenden Seite in Bezug auf die vordere Stirnseite desselben mittleren Abschnitts, die in Richtung der Schale oder des Schilds (12) weist, und mit dem Kopf (14') des Sattelstützenrohrs (14) gekoppelt ist, ein oberer Block (20) mit einer oberen Stirnseite des mittleren Abschnitts (15") der Platte oder des Blechs (15) auf der gegenüberliegenden Seite in Bezug auf die Seite zum Koppeln der Platte oder des Blechs (15) mit dem unteren Block (18) gekoppelt ist.

## Revendications

1. Adaptateur (10) pour selle de bicyclette formant une interface de connexion entre une coque ou un bouclier (12) d'une selle (13) et une tête (14") d'un tube de tige de selle (14) du cadre de bicyclette, comprenant une plaque ou une feuille (15) reliée à la coque ou au bouclier (12) et des moyens d'interface pour ladite plaque ou feuille (15) comprenant une paire de nervures opposées et parallèles (17) s'étendant longitudinalement au niveau des bords latéraux extérieurs (15B) de la plaque ou de la feuille (15) qui coopèrent avec des moyens de serrage par rapport à la tête (14') du tube de tige de selle (14) qui comprennent un bloc inférieur (18) adapté pour se coupler à la tête (14') et comprenant une paire de rebords opposés et parallèles (18") s'étendant longitudinalement et adaptés pour se coupler aux arêtes opposées et parallèles (17) de la plaque ou de la feuille (15), **caractérisé en ce que** ledit adaptateur comprend un élément d'amortissement des vibrations qui comprend un ou plusieurs coussinets stabilisés sur la plaque ou la feuille (15) et disposés entre ladite plaque ou feuille et une partie avant inférieure de la coque ou du bouclier (12).

2. Adaptateur selon la revendication 1, **caractérisé en ce que** la plaque ou la feuille (15) s'étend longitudinalement sur une longueur correspondant sensiblement à l'extension longitudinale de la coque ou du bouclier (12) de la selle (13), elle présente une faible épaisseur et, dans un plan vertical, un profil comprenant une partie avant (15'), une partie centrale (15") comprenant au moins une ouverture centrale (16) de type passage et présentant une extension longitudinale, une partie arrière (15"'), et elle présente des propriétés élastiques.

3. Adaptateur selon la revendication 1 ou 2, **caractérisé en ce que** les nervures opposées et parallèles (17) qui s'étendent longitudinalement sur pratiquement toute la longueur de la partie centrale (15") de la plaque ou de la feuille (15) et sont formées au niveau des bords latéraux extérieurs (15B) de ladite partie centrale (15").

4. Adaptateur selon la revendication 3, **caractérisé en ce que** les nervures opposées et parallèles (17) sont réalisées d'un seul tenant avec la plaque ou la feuille (15), ou alors elles sont des éléments séparés rigidement fixés à ladite plaque ou feuille.

5. Adaptateur selon les revendications précédentes, **caractérisé en ce que** la plaque ou la feuille (15) est stabilisée sous la coque ou le bouclier (12), sa partie avant (15') étant située à une extrémité (12') de la coque ou du bouclier (12) et sa partie arrière opposée (15"') étant stabilisée à l'arrière (12") de la coque ou du bouclier (12).

6. Adaptateur selon la revendication 5, **caractérisé en ce que** la plaque ou la feuille (15) est stabilisée sur ladite coque ou ledit bouclier (12) au moyen de vis (19).

7. Adaptateur selon les revendications précédentes, **caractérisé en ce qu'**il comprend en outre des éléments accessoires destinés à intensifier l'amortissement des vibrations, appliqués au niveau des vis (19) servant à fixer la plaque ou la feuille (15) par rapport à la selle (12) et comprenant des rondelles élastiques (40) serrées entre les vis (19) et la plaque ou la feuille (15).

8. Adaptateur selon les revendications précédentes, **caractérisé en ce qu'**il comprend au moins un premier coussinet (24) couplé à la plaque ou à la feuille (15) au niveau de la partie avant (15') et au moins un deuxième coussinet (26) couplé à la plaque ou à la feuille (15) au niveau de la partie arrière (15"').

9. Adaptateur selon les revendications précédentes, **caractérisé en ce qu'**il comprend un seul coussinet s'étendant sur toute la longueur de la plaque ou de la feuille (15), stabilisé sur ladite plaque ou feuille, ledit coussinet unique pouvant être muni d'une ouverture centrale qui sert à assurer un couplage correct avec une selle munie d'une ouverture centrale ou d'un canal ayant une fonction de protection de la prostate.

10. Adaptateur selon les revendications précédentes, **caractérisé en ce que** le bloc inférieur (18) se couple à une partie avant inférieure de la partie centrale (15") de la plaque ou feuille (15) sur le côté opposé par rapport à la partie avant de la même partie centrale tournée vers la coque ou le bouclier (12) et avec la tête (14') du tube de selle (14), un bloc supérieur (20) se couple à une partie avant supérieure de la partie centrale (15") de la plaque ou feuille (15) sur le côté opposé par rapport au côté pour coupler ladite plaque ou feuille (15) avec ledit bloc inférieur (18).
